# EUROPÄISCHE PATENTSCHRIFT

(11) **EP 2 751 295 B1**
(45) Veröffentlichungstag und Bekanntmachung des Hinweises auf die Patenterteilung: **04.10.2017**
(21) Anmeldenummer: 12758814.3
(22) Anmeldetag: 27.08.2012
(51) Int. Cl.: B21D 22/20, B21J 13/00, B21J 5/06, B62D 29/00, B62D 25/04, C21D 1/673, C21D 8/02

(54) **VERFAHREN ZUM HERSTELLEN EINES PRESSGEHÄRTETEN FORMTEILS SOWIE PRESSHÄRTWERKZEUG**
METHOD FOR PRODUCING A PRESS-HARDENED MOLDED PART, AND PRESS-HARDENING TOOL
PROCÉDÉ POUR FABRIQUER UNE PIÈCE MOULÉE TREMPÉE À LA PRESSE AINSI QU'OUTIL DE TREMPE À LA PRESSE

(30) Priorität: 30.08.2011 DE 102011053118
(43) Veröffentlichungstag der Anmeldung: 09.07.2014
(73) Patentinhaber: Kirchhoff Automotive Deutschland GmbH, 57439 Attendorn (DE)
(72) Erfinder: LÖCKER, Markus, 57413 Finnentrop (DE)
(74) Vertreter: Haverkamp, Jens
(86) Internationale Anmeldenummer: PCT/EP2012/066613
(87) Internationale Veröffentlichungsnummer: WO 2013/030157

(56) Entgegenhaltungen:
- WO-A1-2012/010418
- DE-A1- 2 718 970
- DE-A1-102009 043 926
- DE-U1-202008 016 877

## Beschreibung

Die Erfindung betrifft ein Verfahren zum Herstellen eines pressgehärteten, zumindest zwei sich bezüglich ihrer Festigkeit unterscheidende Bereiche aufweisenden Formteils unter Verwendung eines Presshärtwerkzeuges, in dem ein auf eine Umformtemperatur erwärmter Rohling umgeformt und zum Zwecke einer Vergütung in dem Werkzeug gehalten wird, wobei zum Einstellen der Festigkeit in dem zumindest einen Bereiches geringerer Festigkeit dieser Bereich gegenüber den mit höherer Festigkeit einzustellenden Bereichen langsamer abgekühlt wird, wobei während des Umformschrittes der gesamte Rohling und damit auch sein oder seine zum Einstellen einer geringeren Festigkeit vorgesehenen Bereiche an einer Formoberfläche des Werkzeuges anliegen und nach Abschluss des Umformschrittes die in Kontakt mit dem Formteil stehende Werkzeugoberfläche dergestalt geändert wird, dass der oder die mit geringerer Festigkeit einzustellenden Bereiche während des sich an den Umformschritt anschließenden Abkühlschrittes keinen Werkzeugkontakt aufweisen, wobei die dem oder den Bereichen geringerer Festigkeit des Formteils zugeordnete Werkzeugoberfläche durch gegenüber der übrigen Werkzeugoberfläche verstellbare Werkzeugsegmente gebildet wird und die Werkzeugsegmente zum Ändern der Werkzeugoberfläche nach dem Umformschritt verstellt werden. Ferner betrifft die Erfindung ein Presshärtwerkzeug mit einer formgebenden Oberfläche zum Herstellen eines pressgehärteten, zumindest zwei sich bezüglich ihrer Festigkeit unterscheidende Bereiche aufweisenden Formteils, wobei die dem oder den Bereichen geringerer Festigkeit des Formteils zugeordnete Werkzeugoberfläche durch gegenüber der übrigen Werkzeugoberfläche des Unterwerkzeuges und des Oberwerkzeuges verstellbare Werkzeugsegmente gebildet ist.

Presshärtwerkzeuge sind Werkzeuge, mit denen Metallrohlinge umgeformt und gehärtet werden. Für die Zwecke des Härtens wird je nach Ausgestaltung des Verfahrens ein entsprechend vorerwärmter Rohling dem Presshärtwerkzeug zugeführt, darin umgeformt und nach erfolgter Umformung zu seiner Härtung hinreichend rasch abgekühlt und damit vergütet. Eingesetzt werden derartige Presshärtwerkzeuge beispielsweise zum Herstellen von Strukturbauteilen von Kraftfahrzeugen. Bei den Rohlingen handelt es sich üblicherweise um Stahlblechplatinen.

Es gibt zahlreiche Anwendungsfälle, bei denen ein Fahrzeugstrukturbauteil mit unterschiedlichen Festigkeitswerten gewünscht wird. Bei einem solchen Strukturbauteil kann es sich beispielsweise um die B-Säule eines Kraftfahrzeuges handeln. Bei einer B-Säule wird mitunter gewünscht, dass sich der Bereich des Fußes der Säule durch eine geringere Festigkeit und damit durch eine höhere Duktilität von den daran anschließenden Bereichen mit einer höheren Festigkeit und dementsprechend geringerer Duktilität unterscheidet.

Aus EP 1 180 470 B1 ist eine solche B-Säule bekannt, die zum Zwecke des Einstellens der unterschiedlichen Festigkeiten vor dem Einbringen des Rohlings bereichsweise unterschiedlich erwärmt wird. Dabei ist vorgesehen, diejenigen Bereiche des Rohlings, die bei dem umgeformten Formteil die Bereiche höherer Festigkeit bilden sollen, auf eine höhere Temperatur zu erwärmen als diejenigen, die die diesbezüglich geringeren Festigkeitswerte aufweisen sollen. Eingesetzt wird als Rohling bei dem aus EP 1 180 470 B1 bekannten Verfahren ein Stahlrohling, dessen Bereiche höherer Festigkeit in dem umgeformten Formteil - der B-Säule - auf Austenitisierungstemperatur erwärmt während diejenigen Bereiche des Rohlinges, die bei dem umgeformten Formteil die Bereiche geringerer Festigkeit aufweisen sollen, nur auf eine Temperatur deutlich unterhalb der Austenitisierungstemperatur erwärmt werden. Zum Schützen der weniger hoch zu erwärmenden Bereiche wird in EP 1 180 470 B1 vorgeschlagen, diese Bereiche zu isolieren. Es zeigt sich jedoch, dass die diesbezügliche Handhabung der Rohlinge aufwändig ist. Zudem muss eine gewisse Unschärfe in der Maßhaltigkeit der Abgrenzung der Bereiche höherer Festigkeit von denen geringerer Festigkeit in Kauf genommen werden.

In WO 2006/038868 A1 ist ein weiteres Verfahren offenbart, wie pressgehärtete Formteile mit Bereichen unterschiedlicher Festigkeit hergestellt werden können. Bei diesem vorbekannten Verfahren ist vorgesehen, die Werkzeugausgestaltung so auszulegen, dass diejenigen Bereiche des Rohlinges, die bei dem umgeformten Formteil eine geringere Festigkeit aufweisen sollen, sich in einer Werkzeugkavität befinden. Um das Formteil auch in den Bereichen der einzustellenden geringeren Festigkeit in dem Werkzeug halten zu können, sind in die Kavität Stützstrukturen eingearbeitet, die sich an dem Formteil abstützen. Die Kontaktfläche zwischen der Formoberfläche des Werkzeuges und dem Formteil innerhalb einer solchen Kavität beträgt weniger als 25 % des Flächenbereiches. Auch wenn bei dem in diesem Dokument beschriebenen Verfahren und mit dem darin ebenfalls beschriebenen Presshärtwerkzeug Strukturbauteile mit Bereichen unterschiedlicher Festigkeit hergestellt werden können, wobei der Rohling zuvor einheitlich auf seine Umformtemperatur erwärmt worden ist, ist die Maßhaltigkeit der mit diesem Verfahren bzw. diesem Werkzeug hergestellten Formteile oftmals nicht hinreichend. Gerade bei solchen Strukturbauteilen, bei denen Dichtungen angesetzt werden, wie dieses beispielsweise bei einer B-Säule der Fall ist, genügen die mit diesem Verfahren hergestellten Formteile nicht den notwendigen Toleranzanfrungen. Bei dem aus diesem Stand der Technik bekannt gewordenen Verfahren sind zudem diejenigen Bereiche des Formteils hinsichtlich ihrer Größe beschränkt, die durchgängig eine geringere Festigkeit aufweisen, da in den Kontaktflächen Bereiche höherer Festigkeiten ausgebildet werden.

DE 27 18 970 offenbart ein Verfahren zum Formen einer Bremsscheibe. Hierbei wird ein erhitzter Rohling in ein Formpresswerkzeug eingelegt, wonach ein mittiger Nabenanschlussbereich und ein äußerer Randabschnitt gepresst und festgehalten werden. Durch Verfahren von Teilen des Presswerkzeugs werden die genannten Abschnitte in Richtung der Scheibenachse gegeneinander verschoben, während sie weiterhin gepresst werden, wobei ein dazwischen liegender Abschnitt einem Ziehprozess unterworfen wird. Am Ende des Ziehprozesses wird auch der Zwischenabschnitt gepresst und das gesamte Werkstück wird abgeschreckt. Dieser Stand der Technik offenbart nicht, dass unterschiedliche Festigkeiten an dem hergestellten Werkstück eingestellt werden.

Die nachveröffentlichte WO 2012/010418 A offenbart ein Umformwerkzeug und ein Verfahren zum Warmumformen und partiellen Presshärten eines Werkstücks aus Stahlblech, bei dem zum Zwecke des partiellen Härtens des umgeformten Werkstücks das Umformwerkzeug partiell vom Werkstück in demjenigen Bereich wegbewegt wird, welcher eine geringere Festigkeit aufweisen soll. Die diesbezüglich zusammenwirkenden Matrizenteil und Stempelteil kontaktieren das Werkstück somit gegenüber den Werkstückbereichen, die eine höhere Festigkeit aufweisen sollen, kürzer.

Ausgehend von dem diskutierten Stand der Technik liegt der Erfindung daher die Aufgabe zu Grunde, ein eingangs genanntes Verfahren sowie ein eingangs genanntes Presshärtwerkzeug dergestalt weiterzubilden, dass die Vorteile in der Handhabung des aus WO 2006/038868 A1 bekannten Verfahrens wahrgenommen werden können, wobei dennoch die Maßhaltigkeit der damit hergestellten Formteile verbessert ist, die Einschränkungen hinsichtlich der Größe der Bereiche geringerer Festigkeit nicht in Kauf genommen sowie keine Einbußen in der Oberflächenqualität hingenommen werden müssen.

Gelöst wird diese Aufgabe erfindungsgemäß durch ein Verfahren mit den Merkmalen des Anspruchs 1.

Gelöst wird diese Aufgabe ferner durch ein Presshärtwerkzeug mit den Merkmalen des Anspruchs 5.

Bei dem vorbeschriebenen Verfahren - gleiches gilt auch für das gemäß Anspruch 5 beschriebene Presshärtwerkzeug - wird ein Presshärtwerkzeug verwendet, dessen Werkzeugoberfläche änderbar ist. Die Änderbarkeit der Formoberfläche des Werkzeuges - also derjenigen Oberfläche, an der der umzuformende Rohling bzw. das aus diesem umgeformte Formteil anliegt - bezieht sich auf seine Kontaktfläche mit dem Formteil. Die Änderbarkeit der Formoberfläche ist dergestalt vorgesehen, dass zwar für den Schritt des Umformens eine geschlossene Werkzeugoberfläche bereitgestellt ist, an der der umzuformende Rohling bzw. das umgeformte Formteil anliegen. Für die Zwecke des Einstellens der Bereiche unterschiedlicher Festigkeit wird im Anschluss an den Umformschritt die Werkzeugoberfläche geändert, und zwar dergestalt, dass die für den Umformschritt wirksame Werkzeugoberfläche in denjenigen Abschnitten, an denen die Bereiche des Formteils mit der einzustellenden geringeren Festigkeit anliegen, von der Formteiloberfläche während des Abkühlschrittes abgerückt wird. Infolge dessen liegen diese Formteiloberflächenbereiche für den Schritt des Abkühlens zumindest zeitweise nicht an der Formteiloberfläche an. Da das Werkzeug gekühlt ist, vollzieht sich der Abkühlprozess im Formteil in denjenigen Abschnitten, in denen keine Werkzeugoberfläche an dem Formteil anliegt, deutlich langsamer als in den übrigen Werkzeugbereichen. Ausgenutzt wird bei diesem Konzept, dass zum Einstellen der Formteilbereiche höherer Festigkeit eine bestimmte Abkühlgeschwindigkeit eingehalten werden muss. Dieses wird in denjenigen Bereichen, in denen an dem Formteil während des Abkühlvorganges keine Werkzeugoberfläche anliegt, nicht erreicht, weshalb diese Bereiche nicht vergütet werden und daher nur geringere Festigkeitswerte aufweisen. Bei dem vorbeschriebenen Konzept ist somit Sorge dafür getragen, dass der Abkühlvorgang selektiv in unterschiedlichen Formteilbereichen unterschiedlich durchgeführt werden kann. In denjenigen Bereichen, in denen eine geringere Festigkeit gewünscht wird, ist während des Abkühlprozesses die Kontaktzeit des Formteils mit dem oder den Werkzeugsegmenten gegenüber den Formteilbereichen, in denen eine höhere Festigkeit eingestellt werden soll, reduziert. Dies bedeutet nicht, dass für den gesamten Prozess des Abkühlens diese Formteilbereiche keinen Werkzeugsegmentkontakt aufweisen dürfen. Entscheidend ist, dass die den Formteilbereichen geringerer Festigkeit zugeordneten Werkzeugsegmente in Bezug auf die während des Umformprozesses daran anliegende Formteiloberfläche so angesteuert werden, dass die Abkühlgeschwindigkeit gegenüber den anderen Formteilbereichen herabgesetzt ist. Neben der Möglichkeit, das bzw. die Werkzeugsegmente während des gesamten Abkühlvorganges von den mit geringerer Festigkeit einzustellenden Formteilbereichen abgerückt zu lassen, ist es ebenfalls möglich, diese zwischenzeitlich gegen die Formteilbereiche ein- oder auch mehrfach zurückzufahren. Hierdurch kann die Abkühlgeschwindigkeit beeinflusst werden. Zudem unterstützt eine solche Maßnahme die Maßhaltigkeit dieser Formteilbereiche. Zusätzlich oder auch anstelle des ein- oder mehrfachen Zurückfahrens des oder der Werkzeugsegmente gegen die Formteiloberfläche während des Abkühlvorganges, kann ein Kalibrieren der Formteilbereiche mit geringerer Festigkeit auch nach Abschluss des Abkühlvorganges in der beschriebenen Weise vorgenommen werden.

Die Formoberfläche der für den Umformprozess an dem Formteil anliegenden Formseite des oder Werkzeugsegmente ist größer als der durch eine Verstellung dieser Werkzeugsegmente mit geringerer Festigkeit einzustellende Bereich des Formteils. Bei dieser Ausgestaltung ist der Formseite des oder der Werkzeugsegmente nicht nur der tatsächliche, während des Umformprozesses darin anliegende Bereich des Formteils zugeordnet, sondern zumindest teilweise der sich daran anschließende Übergangsbereich in diejenigen Formteilbereiche mit höherer Festigkeit. Dieses Konzept erlaubt eine Auslegung des Presshärtwerkzeuges, bei dem die Werkzeugsegmente spaltfrei aneinander grenzen können. Dieses ist zur Vermeidung von Werkzeugabdrücken auf der Oberseite des Formteils im Zuge des Umformprozesses wesentlich.

Da während des Umformschrittes der Rohling in Umformrichtung vollflächig an einer Werkzeugoberfläche anliegt und dieses bis zum Abschluss oder zumindest bis kurz vor Abschluss des Umformschrittes aufrechterhalten wird, begründet die besondere Maßhaltigkeit der mit diesem Verfahren und auch mit einem solchen Presshärtwerkzeug hergestellten Formteile.

Die Handhabung eines solchen Werkzeuges ist unkompliziert und kann automatisch gesteuert sein. Die Werkzeugoberflächenbereiche, an denen diejenigen Bereiche des Rohlings bzw. Formteils während des Umformschrittes anliegen und in denen eine geringere Festigkeit eingestellt werden soll, sind typischerweise durch Werkzeugsegmente gebildet, die beispielsweise nach Art von Schiebern bewegt werden. Ein solcher Prozess kann vollautomatisch erfolgen. Vor allem ist es nicht erforderlich, einen Rohling bereichsweise unterschiedlich zu erwärmen, bevor dieser umgeformt wird.

Infolge der Änderung der wirksamen Werkzeugoberfläche zwischen dem Umformschritt und dem Abkühlschritt ist nicht nur eine besonders hohe Maßhaltigkeit in der Endgeometrie des Formteils gewährleistet, sondern zudem auch scharfe und vor allem prozesssicher wiederholbare Abgrenzung der Bereiche unterschiedlicher Festigkeit zueinander gewährleistet.

Besonders vorteilhaft lässt sich dieses Verfahren und das beschriebene Presshärtwerkzeug zum Presshärten von Stahlplatinen einsetzen. In einem solchen Fall wird der Rohling auf seine Austenitisierungstemperatur gebracht, bevor dieser dem Presshärtwerkzeug für die Zwecke des Umformens und seiner partiellen Vergütung zugeführt wird.

Von besonderem Vorteil bei dem beschriebenen Verfahren und bei dem beschriebenen Presswerkzeug ist auch, dass mit diesem ein und dasselbe Strukturbauteil mit Bereichen unterschiedlicher Festigkeit oder auch ohne solche Bereiche hergestellt werden kann. Mit Werkzeugen, mit denen eine Werkzeugoberflächenänderung in unterschiedlichen Bereichen der Werkzeugoberfläche möglich ist, können durch Aktivieren oder entsprechendes Nicht-Aktivieren der diesbezüglichen Werkzeugsegmente Formteile hergestellt werden, in denen entweder die Gesamtzahl der möglichen Bereiche eine geringere Festigkeit aufweisen, nur einzelne derselben oder das gesamte Formteil einheitlich vergütet ist. Dieses gestattet den Einsatz ein und desselben Presshärtwerkzeuges zum Herstellen von von ihrer Geometrie her ein und derselben Formteile, bei denen jedoch unterschiedliche Bereiche eine geringere Härte aufweisen können.

Weitere Vorteile und Ausgestaltungen der Erfindung ergeben sich aus der nachfolgenden Beschreibung von Ausführungsbeispielen unter Bezugnahme auf die beigefügten Figuren. Es zeigen:
- **Fig. 1:**: Eine Darstellung eines Teils eines Presshärtwerkzeuges mit seinem Unterwerkzeug und einem darauf aufliegenden, bereits umgeformten Formteil mit dem Unterwerkzeug zum Bereitstellen einer ersten Werkzeugoberfläche,
- **Fig. 2:**: das Unterwerkzeug der Figur 1 in einer zweiten Stellung zum Bereitstellen einer sich von der Werkzeugoberfläche der Stellung der Figur 1 unterscheidenden Werkzeugoberfläche.
- **Fig. 3:**: Das Presshärtwerkzeug der Figur 1 mit einer weiteren Stellung seines Unterwerkzeuges zum Bereitstellen einer gegenüber der Werkzeugoberfläche des Werkzeuges der Figur 2 unterschiedlichen Werkzeugoberfläche,
- **Fig. 4:**: ein Presshärtwerkzeug prinzipiell ausgeführt wie dasjenige der Figur 1 gemäß einer weiteren Ausgestaltung und
- **Fig. 5:**: ein weiteres Unterwerkzeug eines Presshärtwerkzeuges.

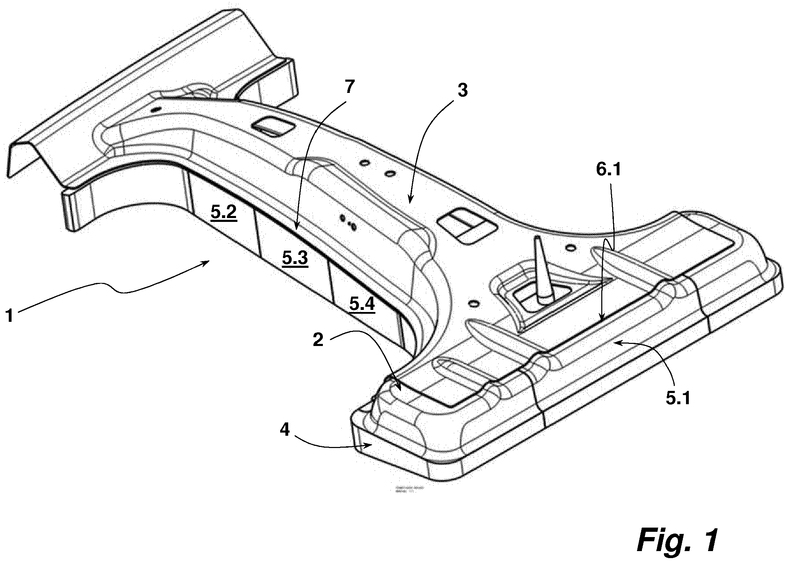

In Figur 1 ist das Unterwerkzeug 1 eines im Übrigen nicht näher dargestellten Presshärtwerkzeuges gezeigt. Auf seiner Formoberfläche 2 liegt ein bereits umgeformter Rohling - ein Formteil 3 - auf, und zwar so, wie dieses auf der Formoberfläche 2 nach dem Umformprozess angeordnet ist. Dem Presshärtwerkzeug ist neben dem Unterwerkzeug 1 auch ein Oberwerkzeug, welches in den Figuren nicht dargestellt ist, zugeordnet. Das Oberwerkzeug ist ebenso konzipiert, wie das nachfolgend näher beschriebene Unterwerkzeug 1.

Das Unterwerkzeug 1 ist aus mehreren Werkzeugteilen zusammengesetzt. Diese umfassen einen Werkzeuggrundkörper 4. Der Werkzeuggrundkörper 4 ist in nicht näher dargestellter Art und Weise gekühlt. Neben dem Werkzeuggrundkörper 4 verfügt das Unterwerkzeug 1 über mehrere Werkzeugsegmente 5.1, 5.2, 5.3 und 5.4, die gegenüber dem Werkzeuggrundkörper 4 verstellbar sind, und zwar in einer Art und Weise, dass deren zu dem Formteil 3 weisende Formfläche, am Werkzeugsegment 5.1 mit dem Bezugszeichen 6.1 gekennzeichnet, gegenüber der Formoberfläche 2 des Werkzeuggrundkörpers 4 weggerückt werden kann. Das Werkzeugsegment 5.1 befindet sich im Bereich des Fußes des Formteils 3; die Werkzeugsegmente 5.2, 5.3 und 5.4 im Bereich eines Flansches 7. Das in den Figuren nicht dargestellte Oberwerkzeug ist entsprechend aufgeteilt, sodass an dem Formteil 3 an den den Werkzeugsegmenten 5.1 - 5.4 gegenüberliegenden Positionen ebenfalls derartige abrückbare, bezüglich ihrer Formoberfläche komplementär ausgebildete Werkzeugsegmente vorhanden sind.

Figur 1 zeigt die durch das Unterwerkzeug 1 bereitgestellte Formoberfläche 2, mit der auf seine Austenitisierungstemperatur erwärmter Stahlblechrohling umgeformt wird.

Das beschriebene Presshärtwerkzeug mit seinem Unterwerkzeug 1 und seinem nicht dargestellten Oberwerkzeug dient zum Herstellen eines Formteils, welches bei dem dargestellten Ausführungsbeispiel eine B-Säule für ein Fahrzeug ist, mit Bereichen unterschiedlicher Festigkeit. Die Bereiche unterschiedlicher Festigkeit in dem Formteil 3 werden dadurch eingestellt, dass nach dem Schritt des Umformens, das heißt: Erst nachdem das Unterwerkzeug 1 und das Oberwerkzeug ihre Pressbewegung zum Umformen des Stahlblechrohlings ausgeführt haben, diejenigen Werkzeugsegmente von der Oberfläche des Formteils 3 abgerückt werden, in welchen daran während des Umformschrittes anliegenden Formteilbereichen eine geringere Festigkeit eingestellt werden soll. Es versteht sich, dass das Presshärtwerkzeug mit seinem Unterwerkzeug 1 und seinem Oberwerkzeug dergestalt konzipiert ist, dass sich die Werkzeugsegmente an denjenigen Positionen befinden, in denen bei dem zu erstellenden Formteil Bereiche einzustellender geringerer Festigkeit anliegen.

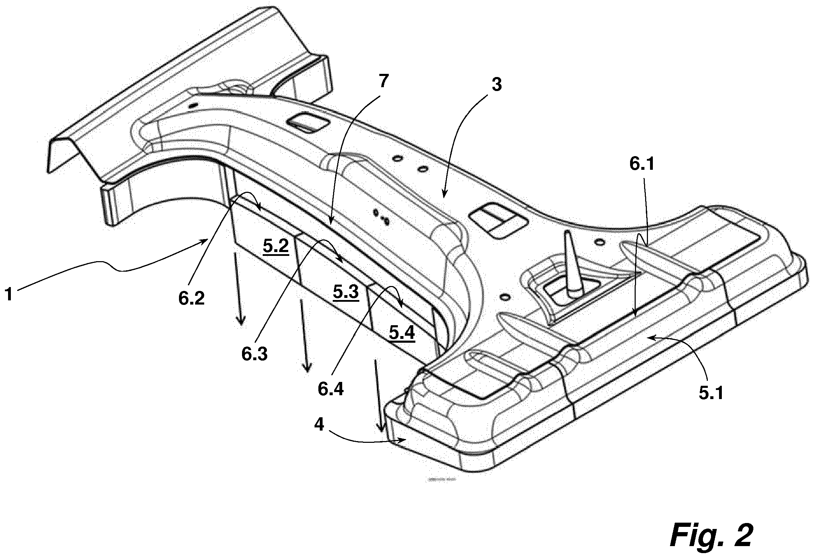

Figur 2 zeigt beispielhaft eine Stellung der Werkzeugsegmente 5.2, 5.3 und 5.4, durch welche geänderte Formoberfläche in einem Teil des Flansches 7 des Formteils 3 nur eine geringere Festigkeit eingestellt werden soll. Demzufolge sind die Werkzeugsegmente 5.2, 5.3 und 5.4 mit ihrer Formoberfläche 6.2, 6.3, 6.4 von den entsprechenden Abschnitten des Flansches 7 nach dem Umformschritt und nach Ändern der Werkzeugoberfläche durch Abrücken der Werkzeugsegmente 5.2, 5.3 und 5.4 von der Oberfläche des Flansches 7 abgerückt. Folglich befindet sich dieser Flanschabschnitt 7 innerhalb des noch geschlossenen Presshärtwerkzeuges in einem Luft gefüllten Hohlraum. Dies hat zur Folge, dass die Abkühlgeschwindigkeit dieses Abschnittes des Flansches 7 auf Grund der deutlich geringeren Wärmeleitfähigkeit von Luft gegenüber der Wärmeleitfähigkeit des Werkzeugstahls des Werkzeuggrundkörpers 4 und des mit seiner Formfläche 6.1 ebenfalls an dem Formteil 3 noch anliegenden Werkzeugsegmentes 5.1. In den Bereichen des Formteils 3, mit denen dieses auf der wirksamen Formoberfläche des Werkzeugunterteils aufliegt, wird dieses mit einer Geschwindigkeit abgekühlt, die für den gewünschten Härteprozess (Vergütung) erforderlich ist. Mithin wird in diesen Bereichen des Formteils 3 durch die Abkühlung nach Art eines Abschrecken eine höhere Festigkeit eingestellt als in denjenigen Bereichen des Formteils 3, die während des Abkühlschrittes keinen Werkzeugkontakt aufweisen, wie dieses bei dem dargestellten Ausführungsbeispiel bezüglich eines Teil des Flansches 7 der Fall ist.

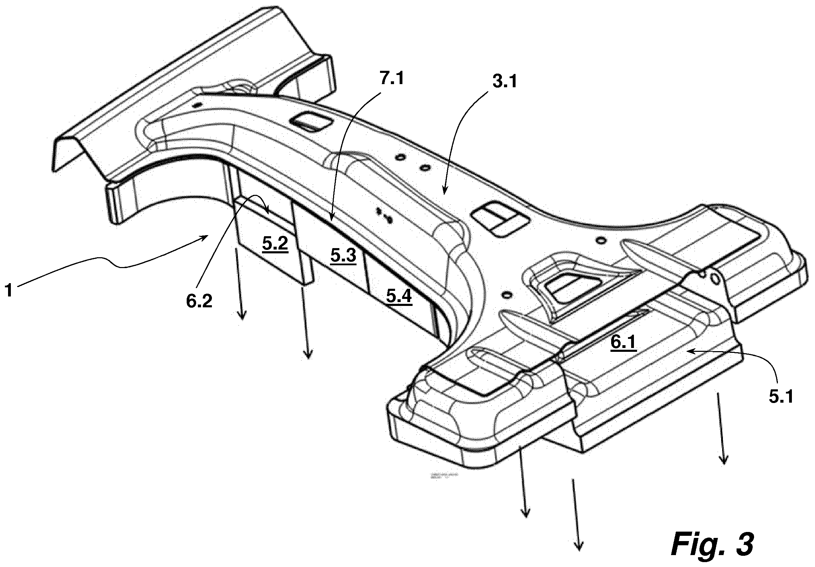

Figur 3 zeigt das Unterwerkzeug 1 des Presshärtwerkzeuges mit einer anderen Ausbildung seiner effektiven Formoberfläche zum Einstellen und von Bereichen unterschiedlicher Festigkeit. Im Unterschied zu der Ausgestaltung der für den Schritt des Abkühlens vorgesehenen effektiven Werkzeugoberfläche bei dem Ausführungsbeispiel Figur 2 ist bei dem Ausführungsbeispiel der Figur 3 vorgesehen, die Werkzeugsegmente 5.1 und 5.2 von der Oberfläche des Formteils 3.1 abzurücken. Infolge dessen wird bei einer Ausbildung der Abkühloberfläche des Unterwerkzeuges 1, wie in Figur 3 dargestellt, im Bereich des Fußes der durch das Formteil 3.1 gebildeten B-Säule ein Bereich geringerer Festigkeit eingestellt ebenso wie in einem kurzen Abschnitt des Flansches 7.1.

Bei dem Werkzeugunterteil 1 sind die Werkzeugsegmente 5.1, 5.2, 5.3 und 5.4 in vertikaler Richtung in nicht näher dargestellter Art und Weise gegenüber dem Werkzeuggrundkörper 4 verstellbar, wie dieses durch die Pfeile in Figuren 2 und 3 angedeutet ist.

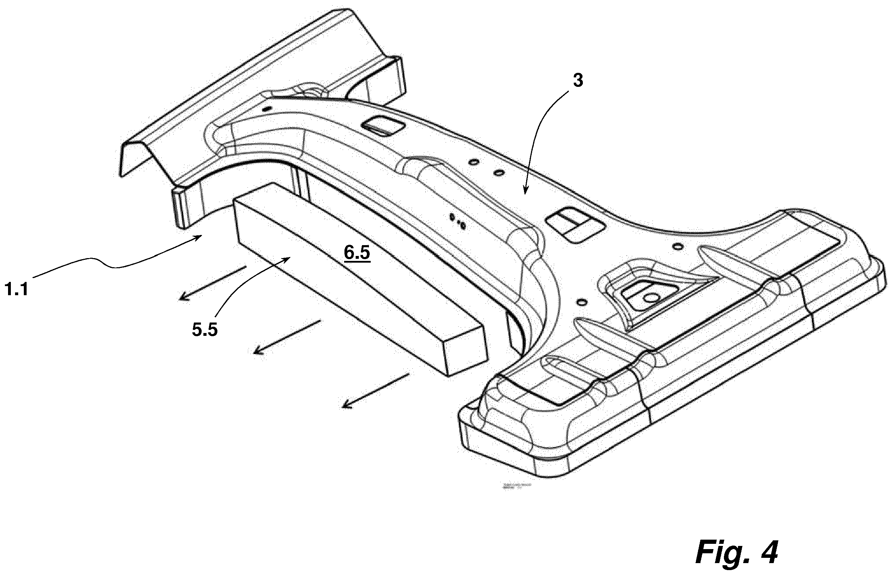

Figur 4 zeigt ein weiteres Unterwerkzeug 1.1 eines im Übrigen nicht näher dargestellten Presshärtwerkzeuges. Dieses ist prinzipiell aufgebaut wie das Unterwerkzeug 1 der Figuren 1 bis 3. Das Unterwerkzeug 1.1 unterscheidet sich von dem Vorbeschriebenen dadurch, dass im Bereich des Flansches 7 nur ein Werkzeugsegment 5.5 angeordnet ist. Dieses ist zum Abrücken seiner Formfläche 6.5 von der Oberfläche des auf dem Unterwerkzeug 1.1 aufliegenden Formteils 3 in horizontaler Richtung verstellbar.

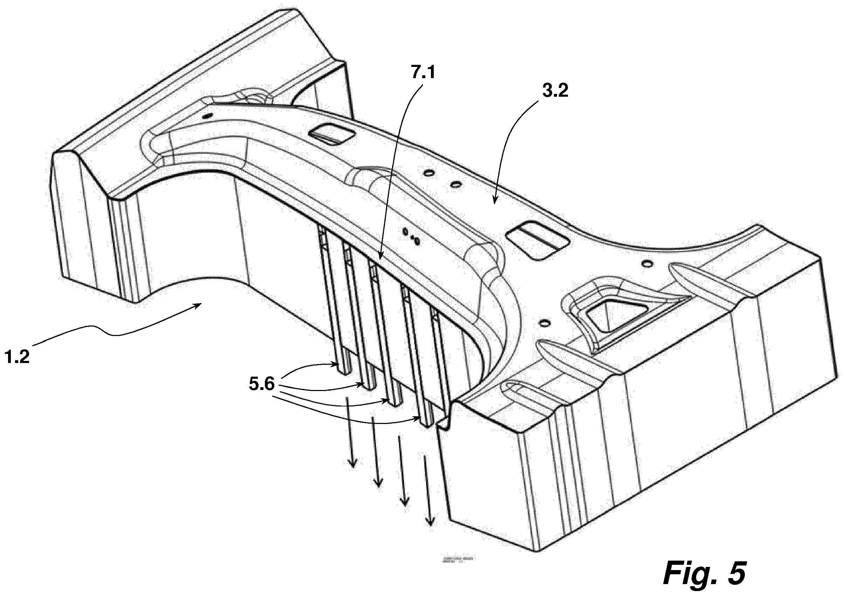

Figur 5 zeigt noch ein weiteres Unterwerkzeug 1.2 eines im Übrigen nicht näher dargestellten Presshärtwerkzeuges. Bei diesem Unterwerkzeug 1.2 ist vorgesehen, im Bereich eines auszubildenden Flansches 7.1 Bereiche geringerer Festigkeit einzustellen, um daran Punktschweißungen vorzunehmen. Aus diesem Grunde verfügt das Unterwerkzeug 1.2 an denjenigen Positionen, an denen bei dem damit herzustellenden Formteil 3.2 Punktschweißungen vorgenommen werden sollen, über einzelne Werkzeugsegmente 5.6. Diese sind in Figur 5 mit ihrer Formfläche von der Oberfläche des Formteils 3.2 abgerückt dargestellt.

Mit Werkzeugen der vorbeschriebenen Art lassen sich Formteile herstellen, deren Bereiche höherer Festigkeit Zugfestigkeiten (R**ₘ**) von 1300 bis 1950 MPa und Steckgrenzen (R**_{p0,2}**) von 950 bis 1520 MPa aufweisen. Die mit geringerer Festigkeit an dem Formteil eingestellten Bereiche können ausgeführt werden, damit diese Zugfestigkeiten (R**ₘ**) von 550 bis 750 MPa und eine Streckgrenze (R**ₚ₀,₂**) von 350 bis 600 MPa aufweisen. Es versteht sich, dass diese Angaben beispielhaft sind. Diese sind auch abhängig von dem eingesetzten Material des Rohlinges. Die beispielhaften Angaben beziehen sich auf ein Stahlblechformteil. Der Unterschied in den Festigkeitswerten macht deutlich, dass sich das beschriebene Verfahren sowie die beschriebenen Presshärtwerkzeuge eignen, die Bereiche unterschiedlicher Festigkeit mit einem hohen Festigkeitskontrast einzustellen.

Die Formseite eines Werkzeugsegmentes ist typischerweise allseitig größer als derjenige Bereich, in dem die geringere Festigkeit eingestellt werden soll. Dieses berücksichtigt, dass zwischen den Bereichen höherer Festigkeit und denjenigen geringerer Festigkeit ein gewisser Übergangsbereich vorhanden ist.

### Bezugszeichenliste

- 1, 1.1, 1.2: Unterwerkzeug
- 2: Formoberfläche
- 3, 3.1, 3.2: Formteil
- 4: Werkzeuggrundkörper
- 5.1, 5.2, 5.3, 5.4, 5.5, 5.6: Werkzeugsegment
- 6.1, 6.2, 6.3, 6.4: Formfläche
- 7, 7.1: Flansch

## Patentansprüche

1. Verfahren zum Herstellen eines pressgehärteten, zumindest zwei sich bezüglich ihrer Festigkeit unterscheidende Bereiche aufweisenden Formteils (3, 3.1, 3.2) unter Verwendung eines Presshärtwerkzeuges, in dem ein auf eine Umformtemperatur erwärmter Rohling umgeformt und zum Zwecke einer Vergütung in dem Werkzeug gehalten wird, wobei zum Einstellen der Festigkeit in dem zumindest einen Bereich geringerer Festigkeit dieser Bereich gegenüber den mit höherer Festigkeit einzustellenden Bereichen langsamer abgekühlt wird, wobei während des Umformschrittes der gesamte Rohling und damit auch sein oder seine zum Einstellen einer geringeren Festigkeit vorgesehenen Bereiche an einer Formoberfläche (2) des Werkzeuges (1, 1.1, 1.2) anliegen und nach Abschluss des Umformschrittes die in Kontakt mit dem Formteil (3, 3.1, 3.2) stehende Werkzeugoberfläche dergestalt geändert wird, dass der oder die mit geringerer Festigkeit einzustellenden Bereiche während des sich an den Umformschritt anschließenden Abkühlschrittes keinen Werkzeugkontakt aufweisen, wobei die dem oder den Bereichen geringerer Festigkeit des Formteils (3, 3.1, 3.2) zugeordnete Werkzeugoberfläche durch gegenüber der übrigen Werkzeugoberfläche verstellbare Werkzeugsegmente (5.1, 5.2, 5.3, 5.4, 5.5, 5.6) gebildet wird und die Werkzeugsegmente (5.1, 5.2, 5.3, 5.4, 5.5, 5.6) zum Ändern der Werkzeugoberfläche (2) nach dem Umformschritt verstellt werden, **dadurch gekennzeichnet, dass** die die Formoberfläche für den Umformprozess an dem Formteil (3, 3.1, 3.2) anliegende Formoberfläche des oder der Werkzeugsegmente (5.1, 5.2, 5.3, 5.4, 5.5, 5.6) größer ist als der einem solchen Werkzeugsegment (5.1, 5.2, 5.3, 5.4, 5.5, 5.6) zugeordnete, mit geringerer Festigkeit einzustellende Bereich des Formteils und dass die Werkzeugsegmente (5.1, 5.2, 5.3, 5.4, 5.5, 5.6) spaltfrei aneinander grenzen.

2. Verfahren nach Anspruch 1, **dadurch gekennzeichnet, dass** die Werkzeugoberfläche dergestalt geändert wird, dass sich der oder die zum Einstellen einer geringeren Festigkeit vorgesehenen Bereiche des Formteils (3, 3.1, 3.2) während des Abkühlprozesses in einer Werkzeugkavität befinden.

3. Verfahren nach Anspruch 1 oder 2, **dadurch gekennzeichnet, dass** der Rohling auf eine einheitliche Umformtemperatur erwärmt worden ist, bevor dieser auf seiner Umformtemperatur befindliche Rohling dem Presshärtprozess unterworfen wird.

4. Verfahren nach einem der Ansprüche 1 bis 3, **dadurch gekennzeichnet, dass** als Rohling ein auf Austenitisierungstemperatur erwärmter Stahlblechrohling, beispielsweise eine Stellblechplatine, verwendet wird.

5. Presshärtwerkzeug mit einer formgebenden Oberfläche (2) zum Herstellen eines pressgehärteten, zumindest zwei sich bezüglich ihrer Festigkeit unterscheidende Bereiche aufweisenden Formteils (3, 3.1, 3.2), welches Presshärtwerkzeug ein Unterwerkzeug (1) und ein Oberwerkzeug aufweist, wobei die dem oder den Bereichen geringerer Festigkeit des Formteils zugeordnete Werkzeugoberfläche (6.1, 6.2, 6.3, 6.4, 6.5) durch gegenüber der übrigen Werkzeugoberfläche des Unterwerkzeuges (1) und des Oberwerkzeuges verstellbare Werkzeugsegmente (5.1, 5.2, 5.3, 5.4, 5.5, 5.6) gebildet ist, **dadurch gekennzeichnet, dass** die die Formfläche (6.1, 6.2, 6.3, 6.4, 6.5) für den Umformprozess an dem Formteil (3, 3.1, 3.2) anliegende Formfläche des oder der Werkzeugsegmente (5.1, 5.2, 5.3, 5.4, 5.5, 5.6) größer ist als der mit einem solchen Werkzeugsegment (5.1, 5.2, 5.3, 5.4, 5.5, 5.6) jeweils mit geringerer Härte durch Festigkeit einstellbare Bereich des Formteils und dass die Werkzeugsegmente (5.1, 5.2, 5.3, 5.4, 5.5, 5.6) spaltfrei aneinander grenzen.

6. Presshärtwerkzeug nach Anspruch 5, **dadurch gekennzeichnet, dass** die Formfläche (6.1, 6.2, 6.3, 6.4, 6.5) des oder der Werkzeugsegmente (5.1, 5.2, 5.3, 5.4, 5.5, 5.6) allseitig größer ist als der damit am Ende des Umformschrittes in Kontakt stehende Bereich mit geringerer einzustellender Festigkeit des Formteils (3, 3.1, 3.2).

7. Presshärtwerkzeug nach Anspruch 5 oder 6, **dadurch gekennzeichnet, dass** das oder die Werkzeugsegmente (5.1, 5.2, 5.3, 5.4, 5.5, 5.6) des Presshärtwerkzeuges (1, 1.1, 1.2) nach Art jeweils eines Schiebers innerhalb des Werkzeuges verstellbar sind.

8. Presshärtwerkzeug nach einem der Ansprüche 5 bis 7, **dadurch gekennzeichnet, dass** die miteinander zusammenwirkenden Werkzeughälften des Presshärtwerkzeuges verstellbare Werkzeugsegmente an einander bezüglich eines darin befindlichen Formteils gegenüber liegenden Positionen aufweisen.

## Claims

1. Method for producing a press-hardened molded part (3, 3.1, 3.2), having at least two regions that differ regarding their strengths, making use of a press-hardening tool, in which a blank, heated to a forming temperature, is formed and is held in the tool for the purpose of heat-treating, wherein, in order to set the strength in the at least one region of lower strength, this region is cooled more slowly than the regions to be set with greater strength, wherein, during the forming step, the entire blank, and thus also the region(s) of the blank intended to be set to a lower strength, are in contact with a molding surface (2) of the tool (1, 1.1, 1.2), and, after the conclusion of the forming step, the tool surface in contact with the molded part (3, 3.1, 3.2) is changed in such a way that the region(s) to be set with lower strength have no tool contact during the cooling step that follows the forming step, wherein the tool surface associated with the region(s) of lower strength of the molded part (3, 3.1, 3.2) is formed by tool segments (5.1, 5.2, 5.3, 5.4, 5.5, 5.6) that can be adjusted relative to the remaining tool surface, and the tool segments (5.1, 5.2, 5.3, 5.4, 5.5, 5.6) are adjusted after the forming step in order to change the tool surface (2), **characterised in that** the molding surface, which is in contact with the molding surface for the forming process at the molded part (3, 3.1, 3.2), of the tool segment(s) (5.1, 5.2, 5.3, 5.4, 5.5, 5.6) is larger than the region of the molded part to be set with lower strength, associated with one such tool segment (5.1, 5.2, 5.3, 5.4, 5.5, 5.6), and that the tool segments (5.1, 5.2, 5.3, 5.4, 5.5, 5.6) adjoin one another without any gaps.

2. Method according to claim 1, **characterised in that** the tool surface is changed in such a way that the region(s) of the molded part (3, 3.1, 3.2) intended to be set with lower strength are located during the cooling process in a tool cavity.

3. Method according to claim 1 or 2, **characterised in that** the blank is heated to a uniform forming temperature before this blank, being at its forming temperature, is subjected to the press-hardening process.

4. Method according to any one of claims 1 to 3, **characterised in that** a steel sheet blank, such as a steel sheet bar, heated to austenising temperature, is used as the blank.

5. Press-hardening tool with a form-providing surface (2) for producing a press-hardened molded part (3, 3.1, 3.2), comprising at least two regions differing with regard to strength, said press-hardening tool comprising a lower tool (1) and an upper tool, wherein the tool surface (6.1, 6.2, 6.3, 6.4, 6.5) associated with the region(s) of lower strength of the molded part is formed by tool segments (5.1, 5.2, 5.3, 5.4, 5.5, 5.6) which can be adjusted in relation to the remaining tool surface of the lower tool (1) and of the upper tool, **characterised in that** the molding surface, which is in contact with the molding surface (6.1, 6.2, 6.3, 6.4, 6.5) for the forming process at the molded part (3, 3.1, 3.2), of the tool segment(s) (5.1, 5.2, 5.3, 5.4, 5.5, 5.6) is larger than the region of the molded part which is adjustable with such a tool segment (5.1, 5.2, 5.3, 5.4, 5.5, 5.6) in each case with lower hardness due to [*lower*] strength, and that the tool segments (5.1, 5.2, 5.3, 5.4, 5.5, 5.6) adjoin one another without any gaps.

6. Press-hardening tool according to claim 5, **characterised in that** the molding surface (6.1, 6.2, 6.3, 6.4, 6.5) of the tool segment(s) (5.1, 5.2, 5.3, 5.4, 5.5, 5.6) is larger on all sides than the region of the molded part (3, 3.1, 3.2), in contact with it at the end of the forming step, to be set with lower strength.

7. Press-hardening tool according to claim 5 or 6, **characterised in that** the tool segment(s) (5.1, 5.2, 5.3, 5.4, 5.5, 5.6) of the pres-hardening tool (1, 1.1, 1.2) are adjustable inside the tool in the form in each case of a slide element.

8. Press-hardening tool according to any one of claim 5 to 7, **characterised in that** the interacting tool halves of the press-hardening tool comprise adjustable tool segments at positions located opposite one another in relation to a molded part located therein.

## Revendications

1. Procédé pour fabriquer une pièce moulée trempée à la presse, présentant au moins deux zones se différenciant par leur résistance (3, 3.1, 3.2) en utilisant un outil de durcissement sous presse, au cours duquel un disque brut chauffé à une température de déformation est déformé et est maintenu dans l'outil à des fins de compensation, moyennant quoi, pour régler la résistance dans au moins une zone de plus faible résistance, cette zone est refroidie plus lentement par rapport aux zones devant être réglées à une plus forte résistance, moyennant quoi, au cours de l'étape de déformation, l'ensemble du disque brut, et donc également sa ou ses zone(s) conçue(s) pour régler une plus faible résistance, sont placés sur une surface moulée (2) de l'outil (1, 1.1, 1.2) et, une fois l'étape de déformation terminée, la surface de l'outil en contact avec la pièce moulée (3, 3.1, 3.2) est modifiée de telle manière que la ou les zone(s) devant être réglée(s) sur une plus faible résistance ne présente(nt) aucun contact avec l'outil pendant l'étape de refroidissement prenant fin au cours de l'étape de déformation, moyennant quoi la surface d'outil associée à la ou aux zone(s) de plus faible résistance de la pièce moulée (3, 3.1, 3.2) est formée grâce aux segments d'outil (5.1, 5.2, 5.3, 5.4, 5.5, 5.6) réglables par rapport à la surface de l'outil habituelle et les segments d'outil (5.1, 5.2, 5.3, 5.4, 5.5, 5.6) sont ajustés pour modifier la surface d'outil (2) après l'étape de formation, **caractérisé en ce que** la surface moulée des segments d'outils (5.1, 5.2, 5.3, 5.4, 5.5, 5.6) placée, pour le processus de déformation, sur la pièce moulée (3, 3.1, 3.2) est supérieure à la zone de la pièce moulée 30 devant être réglée à une plus faible résistance, associée à un tel segment d'outil (5.1, 5.2, 5.3, 5.4, 5.5, 5.6).

2. Procédé selon la revendication 1, **caractérisé en ce que** la surface d'outil est modifiée de telle sorte que la ou les zone(s) de la pièce moulée (3, 3.1, 3.2) conçue(s) pour régler une plus faible résistance se trouvent, pendant le processus de refroidissement, dans une cavité d'outil.

3. Procédé selon la revendication 1 ou 2, **caractérisé en ce que** le disque brut a été chauffé à une température de déformation uniforme avant que ce disque brut se présentant à sa température de déformation ne soit soumis au processus de durcissement sous presse.

4. Procédé selon l'une quelconque des revendications 1 à 3, **caractérisé en ce que** l'on utilise comme disque brut un disque brut en tôle d'acier chauffé à une température d'austénitisation, par exemple une plaque de tôle en acier.

5. Outil de trempe à la presse présentant une surface de formage (2) pour fabriquer une pièce moulée (3, 3.1, 3.2) durcie à la presse, présentant au moins deux zones se différenciant par leur résistance, lequel outil de durcissement sous presse présente un outil inférieur (1) et un outil supérieur, moyennant quoi la surface d'outil (6.1, 6.2, 6.3, 6.4, 6.5) associée à la ou aux zone(s) de plus faible résistance de la pièce moulée est formée grâce aux segments d'outil (5.1, 5.2, 5.3, 5.4, 5.5, 5.6) réglables par rapport à la surface habituelle de l'outil inférieur (1) et de l'outil supérieur, **caractérisé en ce que** la surface moulée (6.1, 6.2, 6.3, 6.4, 6.5) du ou des segment(s) d'outil (5.1, 5.2, 5.3, 5.4, 5.5, 5.6) placée, pour le processus de déformation, sur la pièce moulée (3, 3.1, 3.2) est supérieure à la zone de la pièce moulée de dureté inférieure et de résistance réglable avec un tel segment d'outil (5.1 , 5.2, 5.3, 5.4, 5.5, 5.6).

6. Outil de trempe à la presse selon la revendication 5, **caractérisé en ce que** la surface moulée (6.1, 6.2, 6.3, 6.4, 6.5) du ou des segment(s) d'outil (5.1, 5.2, 5.3, 5.4, 5.5, 5.6) est, de tous les côtés, supérieure à la zone de la pièce moulée (3, 3.1, 3.2) en contact à la fin de l'étape de déformation d'une résistance devant être réglée plus faible.

7. Outil de trempe à la presse selon la revendication 5 ou 6, **caractérisé en ce que** le ou les segment(s) d'outil (5.1, 5.2, 5.3, 5.4, 5.5, 5.6) de l'outil de durcissement sous presse (1, 1.1, 1.2) sont réglables à l'intérieur de l'outil suivant le type de coulisseau.

8. Outil de trempe à la presse selon l'une quelconque des revendications 5 à 7, **caractérisé en ce que** les moitiés d'outil interagissant de l'outil de durcissement sous presse présentent des segments d'outil réglables sur d'autres positions opposées par rapport à une pièce moulée se trouvant sur place.
